(19) **Europäisches Patentamt**

**European Patent Office**

**Office européen des brevets**

(11) **EP 0 656 331 B1**

(12) **EUROPEAN PATENT SPECIFICATION**

(45) Date of publication and mention
of the grant of the patent:
**04.03.1998 Bulletin 1998/10**

(51) Int. Cl.$^6$: **C04B 35/83**

(21) Application number: **94118606.6**

(22) Date of filing: **25.11.1994**

(54) **A method for preparing a carbon/carbon composite material**

Verfahren zur Herstellung von Kohlenstoff/Kohlenstoffverbundmaterial

Méthode de préparation d'un matériau composite carbone/carbone

(84) Designated Contracting States:
**DE FR GB**

(30) Priority: **29.11.1993 JP 320817/93**

(43) Date of publication of application:
**07.06.1995 Bulletin 1995/23**

(73) Proprietor: **NIPPON OIL Co. Ltd.**
**Minato-ku Tokyo (JP)**

(72) Inventors:
• **Soda, Yoshio,**
**c/o Nippon Oil Co., Ltd.**
**Naka-ku, Yokohama-shi, Kanagawa (JP)**
• **Kohno, Takefumi,**
**c/o Nippon Oil Co., Ltd.**
**Naka-ku, Yokohama-shi, Kanagawa (JP)**
• **Shinagawa, Masaaki,**
**c/o Nippon Oil Co., Ltd.**
**Naka-ku, Yokohama-shi, Kanagawa (JP)**
• **Kiuchi, Noriyuki,**
**c/o Nippon Oil Co., Ltd.**
**Naka-ku, Yokohama-shi, Kanagawa (JP)**

(74) Representative:
**Grünecker, Kinkeldey,**
**Stockmair & Schwanhäusser**
**Anwaltssozietät**
**Maximilianstrasse 58**
**80538 München (DE)**

(56) References cited:
**DE-A- 3 921 980**

• **CARBON, vol.11, 1973 pages 570 - 574 E. FITZER**
**ET AL. 'The pyrolysis of pitch ...'**

**Description**

BACKGROUND OF THE INVENTION

1. Field of the Invention

This invention relates to a method for preparing a carbon/carbon composite material.

2. Prior Art

Carbon fiber reinforced carbon matrix composite materials are light in weight and have thermal resistance and, further, they are superior in sliding movability, strength, breaking toughness and thermal conductivity etc., so that they are used as industrial materials such as heat resistant materials, brake materials and furnace materials.

In the preparation of the carbon fiber reinforced/carbon composite materials, firstly carbon fibers are molded or carbon fibers together with pitch or a thermoset resin as a binder are molded, they are then carbonised to make preforms and the preform so made are subsequently densified.

Although there has been proposed a method for completing said preform and densification in one step, the obtained carbon fiber reinforced carbon matrix composite materials will be insufficient in strength and sliding movability and will be unable to be used as heat resistant structural materials for space applications or brake materials even if they may be used as furnace materials and the like. Therefore, carbon fiber reinforced carbon matrix composite materials adapted for applications requiring sufficient strength and sliding movability are generally prepared by firstly making preforms thereof and then densifying the preforms.

A CVD (chemical vapor deposition) method has hitherto been most widely used as a process of densifying such preforms, but said method takes a long period of time and incurs high costs. On the other hand, there is a method for impregnating preforms with a thermosetting resin such as a phenolic resin or a furan resin and carbonizing the resin so impregnated, but said method also takes a long period of time for carbonization of the resin and is not preferable in view of a cost because of its low yield, and the method has a disadvantage that the obtained composite material is low in thermal conductivity.

Furthermore, there is a method which comprises using pitch for densification, but said method generally has disadvantages that pitch is carbonised via its liquid phase so as to be bubbled during carbonization by gases produced by thermal cracking, etc. at normal pressure with the result that the obtained carbonised material is markedly low in bulk density. Additionally, the yield of carbonized material obtained at this time is also low. In order to prevent bubbling during carbonization and a decrease in yield of carbonized material, there has been proposed a method for carbonization under pressure. For example, there has been reported in ICCM (International Conference on Composite Materials) -2, PP. 1302 - 1319 (1978) a method to carbonize pitch in a HIP device under a pressure of 6.9 - 68.9 MPa (70 - 703 kgf/cm$^2$), whereby a yield obtained is improved.

It has also been reported in "Carbon, Vol. 11, PP. 570 - 574 (1973)" that yields of carbonized materials obtained by carbonizing pitch under pressure up to 100 bars (102 kgf/cm$^2$) were examined whereby the pressuring effect was found to be achieved at a pressure of 25 bars (25.5 kgf/cm$^2$) or above.

However, these proposed methods require special devices such as a HIP (Hot Isostatic Pressure) device, an autoclave or a metallic bomb and are low in productivity. In addition, these devices for applying high pressures have been a cause for various limitations on the manufacture of large-sized products.

Summary of the Invention

An object of this invention is to provide a method for preparing a carbon/carbon composite material efficiently without using any ultra-high pressure device.

The above-mentioned object of this invention is attained by a preparation method described below.

The method of the present invention for a carbon/carbon composite material comprises the steps of impregnating a carbon preform with carbonaceous pitch having a carbon/hydrogen atomic ratio of less than 1.60, and carbonizing or carbonizing and graphitizing the preform the thus impregnated preform to densify the preform, said carbonization or carbonization and graphitization are carried out at 500 - 2800 °C in an inert gas atmosphere, and a densification parameter expressed by the following formula: densification parameter = (yield of carbonized pitch obtained by carbonization of pitch under gas pressure) × (relative density of carbonized pitch obtained by carbonization under gas pressure) (wherein said yield is a ratio by weight of carbonized pitch obtained by carbonization of carbonaceous pitch alone under the same gas pressure as in the densifying step, to the carbonaceous pitch used; and said relative density is a value obtained by dividing the bulk density of carbonized pitch obtained by carbonization of carbonaceous pitch alone under the same gas pressure as in the densification step by the true density of said carbonized pitch) is in the range of from 0.1 to 1.0, and further a gas pressure which is higher than atmospheric pressure and less than 0.98 MPa (10 kgf/cm$^2$) is applied in said densifying step.

The method of preparing a carbon/carbon composite material according to this invention is explained in more detail as follows.

The carbon preforms defined in this invention are referred to as those obtained by molding carbon fibers and/or raw materials for carbon fibers or by molding these fibers and carbon matrix precursor.

The carbon fibers defined herein are ones which are obtained by carbonization or graphitization of precursor fibers derived from pitch, polyacrylonitrile or rayon. The carbonization treatment is carried out at 1000 - 1500 °C; and the graphitization treatment, at 2000 - 3000 °C. The raw materials for carbon fibers are precursors of the above-mentioned carbon fibers. For example, the precursor fibers of pitch-derived carbon fibers are ones obtained by spinning pitch having a softening point of 200 - 400 °C, ones obtained by making the pitch-spun fibers infusible, or ones obtained by pre-carbonization treatment. Although treating temperatures of the precursor fibers vary other with individual processes, the infusibilizing or stabilizing treatment is carried out at 200 - 450 °C; the pre-carbonization treatment, at 400 - 1000 °C.

The molded products of carbon fibers and/or raw materials for carbon fibers are referred to as two-dimensional or three-dimensional moldings made from fiber aggregates such as three-dimensional textiles, felts and mats.

Furthermore, the products obtained by compositely molding carbon fibers and/or raw materials for carbon fibers together with raw materials for carbon matrix, are referred to as those obtained by molding a bundle composed of 500 - 25,000 fibers, one-directional laminates, multi-directional laminates, two-dimensional textiles or their laminates with use of carbonizable binders (which is one of the carbon matrix materials) and thereafter carbonizing them.

Herein, as the carbon matrix precursor, there may be mentioned those having thermoplastic property such as pitch having a softening point of 100 - 400 °C (binder pitch) as well as those having thermosetting property such as a phenolic resin and a furan resin.

It is desirable that the carbon preforms used in this invention have a void volume fraction of generally 5 - 80%, preferably 10 - 75%, and more preferably 20 - 75%.

According to this invention, the above-mentioned carbon preforms are impregnated with carbonaceous pitch and then carbonized or carbonized and graphitized under an inert gas atmosphere at 500 - 2800 °C to densify the preforms. On this occasion, it is necessary that the above-mentioned densification parameter be not less than 0.1 and that a pressure above atmospheric pressure and less than 0.98 MPa (10 kgf/cm$^2$) be applied.

In particular, it is necessary to select such pitch that the densification parameter after carrying out carbonization under pressure above atmospheric pressure and less than 0.98 MPa (10 kgf/cm$^2$) exhibits a value between 0.10 and 1.0, preferably a value between 0.15 and 1.0. If the densification parameter is less than the above mentioned range, the densifying effect will decrease and take a long period of time to achieve, the impregnation and carbonization will increase in number of cycles, or a high pressure is necessary at the time of carbonization, any of which are not preferable.

Carbonaceous pitch is coal- or petroleum-derived pitch having a softening point of 40 - 400 °C, preferaby 50 - 250 °C, among which one satisfying said densification parameter is used herein. Carbonaceous pitch, whether optically isotropic or anisotropics may be used herein as long as it satisfies said densification parameter. The carbon/hydrogen atomic ratio of carbonaceous pitch is less than 1.60, preferably less than 1.50. If the carbon/hydrogen atomic ratio of carbonaceous pitch is more than the above-mentioned range, the carbonaceous pitch may not satisfy the required densification parameter of 0.10 or more.

It is possible to melt the usable carbonaceous pitch under a reduced pressure or to increase its fluidity by means of a solvent, in order to impregnate the preforms with the carbonaceous pitch.

An upper limit of a temperature during the carbonization under gas pressure is generally not more than 2800 °C, preferably not more than 2500 °C, more preferably not more than 2000 °C, much more preferably not more than 1500 °C, and most preferably not more than 1100 °C. A lower limit of a temperature during the carbonization under gas pressure is not less than 500 °C, preferably not less than 560 °C, more preferably not less than 610 °C, much more preferably not less than 660 °C, and most preferably not less than 710 °C. An upper limit of a temperature during the graphitization under gas pressure is not more than 2800 °C and more preferably not more than 2500 °C. A lower limit of a temperature during the graphitization under gas pressure is generally not less than 1500 °C, preferably not less than 2000 °C and more preferably not less than 2200 °C. If the temperature used is less than the above-mentioned range, sufficient effects of carbonization and graphitization under gas pressure may undesirably not be obtained. Furthermore, the heating rate used herein is generally 1 °C/hour - 1000 °C/hour, preferably 2 °C/hour - 500 °C/hour, more preferably 10 °C/hour - 300 °C/hour.

The gas pressure used during the carbonization and graphitization under pressure is above the atmospheric pressure and less than 0.98 MPa (10 kgf/cm$^2$), preferably from 2 kgf/cm$^2$ up to less than 10 kgf/cm$^2$, more preferably from 7 kgf/cm$^2$ up to less than 10 kgf/cm$^2$. In the case of using a pressure less than the above-mentioned range, the carbonization yield and densification parameter will be markedly lowered. Furthermore, in the case of using a pressure more than the above-mentioned range, there will not be recognized any large increase in carbonization yield and a device resistible to such a high pressure will be quite expensive. Although there is a method to fill gas in a furnace at any pressure less than a specified presssure and then increase the pressure of the filled gas to the specified pressure with use of volume expansion of the gas occurring with the temperature raise in the furnace, the low molecular components in pitch may start to vaporize or decompose before the specified pressure being attained and, therefore, it is preferable to set a intra-furnace pressure at the specified pressure at the beginning of carbonization under pressure.

A gas used for applying a pressure is not perticularly limited as long as it is non-oxidizing, and it may generally be nitrogen gas or argon gas.

The carbon/carbon composite materials can thus be prepared by densifying the carbon preforms as described above, and furthermore it is possible to further enhance the composite materials in density by densifying again or improve the composite materials in properties by carrying out carbonization or carbonization and graphitization under normal pressure if necessary.

As described above, the densification parameter is the one shown by the following formula: densifying parameter = (yield of carbonized pitch obtained by carbonization under gas pressure) × (relative density of the carbonized pitch . A method for measuring the parameter is described as follows.

Carbonaceous pitch to be used for densification is firstly introduced into a refractory crucible or the like and then carbonized. At this time, the carbonization is carried out at the same pressure and temperature as those used in the densification.

The yield of carbonized pitch obtained by carbonization under gas pressure is a ratio between the weight of carbonaceous pitch before carbonization and that of carbonized pitch (coke) obtained from the pitch.

Furthermore, the relative density of carbonized pitch obtained by carbonization under gas pressure is a value obtained by dividing the bulk density of the carbonized pitch by the true density thereof.

Then, the densification parameter can be obtained from the yield of carbonized pitch obtained from carbonization of pitch under gas pressure and the relative density of carbonized pitch obtained under said gas pressure.

According to the invention, carbon preforms can be densified effectively without using any ultra-high pressure device.

Description of the Preferred Embodiments

The invention will now be described concretely with reference to the following Examples and Comparative Examples.

Example 1

(Measurement of densification parameter)

Pitch A having a carbon content of 93.4 wt.%, a hydrogen content of 6.6 wt.% and a carbon/hydrogen atomic ratio = 1.18 and containing no optical anisotropic phase was introduced into a refractory crucible, heated to 1000 °C at a rate of 2 °C/min in a furnace which had been pressurized by nitrogen to 9.5 kgf/cm$^2$, and then kept at 1000 °C for 120 minutes to carry out carbonization of the pitch A under pressure, whereby a densification parameter of 0.18 was obtained.

(Preparation of carbon/carbon composite material)

A carbon preform having a void volume fraction of 70% which was prepared by melt spinning an optically anisotropic meso pitch having a softening point of 280 °C, making the spun pitch fiber infusible, carbonizing the fiber and then preforming the fiber into a felt, was impregnated with the abovementioned pitch A in the matter state under a reduced pressure, heated to 1000 °C at a rate of 2 °C/min in a furnace which had been pressurized by nitrogen to 9.5 kgf/cm$^2$, and kept at 1000 °C for 120 minutes to carry out carbonization of the impregnated preform under pressure, whereby was obtained a carbon/carbon composite material having a void volume fraction of 40%.

Comparative Example 1

(Measurement of densification parameter)

Optical anisotropic pitch B having a carbon content of 95.1 wt.%, a hydrogen content of 4.9 wt.% and a carbon/hydrogen atomic ratio = 1.62 was introduced into a refractory crucible, heated to 1000 °C at a rate of 2 °C/min in a furnace which had been pressurized by nitrogen to 9.5 kgf/cm$^2$, and then kept at 1000 °C for 60 minutes to carry out carbonization of the pitch B, whereby a densification parameter of 0.01 was obtained.

(Preparation of carbon composite material)

A carbon preform having a void volume fraction of 70% was impregnated with the above-mentioned pitch B under a reduced pressure, heated to 1000 °C at a rate of 2 °C/min in a firing furnace which had been pressurized by nitrogen to 9.5 kgf/cm$^2$, and then kept at 1000 °C for 120 minutes to carry out carbonization of the impregnated preform under pressure, whereby the void volume fraction of the thus obtained preform remained 50%.

Further, in order to increase the densification parameter of pitch B to the same level as that of pitch A, it was necessary to apply a pressure of 100 kgf/cm$^2$.

Example 2

(Measurement of densification parameter)

Pitch A having a carbon content of 93.4% by weight, a hydrogen content of 6.6% by weight and a carbon/hydrogen atomic ratio = 1.18 and containing no optical anisotropic phase was introduced into a refractory crucible, heated to 1000 °C at a rate of 2 °C/min in a furnace which had been pressurized by nitrogen to 9.5 kgf/cm$^2$, and then kept at 1000 °C for 120 minutes to carry out carbonization of the pitch A under pressure, whereby a densification parameter of 0.18 was obtained.

(Preparation of carbon/carbon composite material)

A carbon preform which was prepared by plain weaving pitch-derived carbon fibers and then preforming the thus woven carbon fibers using a pitch having a softening point of 280 °C at 700 °C to obtain a carbon preform having a fiber volume fraction of 55%, a matrix volume fraction of 20% and a void volume fraction of 25% was impregnated with the above pitch A, heated to 1000 °C at a rate of 2 °C/min in a furnace which had been pressurized by nitrogen to 9.5 kgf/cm$^2$, and then kept at 1000 °C for 120 minutes to carry out carbonization of the impregnated preform under pressure, whereby was obtained a carbon/carbon composite material having a void volume fraction of 15%.

Comparative Example 2

(Measurement of densification parameter)

Optical anisotropic pitch B having a carbon content of 95.1 wt.%, a hydrogen content of 4.9 wt.% and a carbon/hydrogen atomic ratio = 1.62 was introduced into a refractory crucible, heated to 1000 °C at a rate of 2 °C/min in a firing furnace which had been pressurized by nitrogen to 9.5 kgf/cm$^2$, and then kept at 1000 °C for 120 minutes to carry out carbonization of the pitch B under pressure, whereby a densification parameter of 0.01 was obtained.

(Preparation of carbon/carbon composite material)

A carbon preform having a void volume fraction of 25% was impregnated with the above-mentioned pitch B, heated to 1000 °C at a rate of 2 °C/min in a furnace which had been pressurized by nitrogen to 9.5 kgf/cm$^2$, and then kept at 1000 °C for 120 minutes to carry out carbonization of the impregnated preform under pressre, whereby the void volume fraction of the thus obtained preform remained 20%.

Furthermore, in order to increase the densification parameter of pitch B to the same level as that of pitch A, it was necessary to apply a pressure of to 100 kgf/cm$^2$.

Example 3

(Measurement of densification parameter)

Pitch C having a carbon content of 95.0 wt.%, a hydrogen content of 5.0 wt.% and a carbon/hydrogen atomic ratio = 1.58 and containing no optical anisotropic phase was introduced into a refractory crucible, heated to 800 °C at a rate of 2 °C/min in a firing furnace which had been pressurized by nitrogen to 9.5 kgf/cm$^2$, and then kept at 800 °C for 60 minutes to carry out carbonization of the pitch C under pressure, whereby a densification parameter of 0.12 was obtained.

(Preparation of carbon/carbon composite material)

A carbon preform having a void volume fraction of 25% was impregnated with the abovementioned pitch C, heated to 800 °C at a rate of 2 °C/min in a firing furnace which had been pressurized by nitrogen to 9.5 kgf/cm$^2$, and then kept at 800 °C for 120 minutes to carry out carbonization of the impregnated preform under pressure, whereby a carbon/carbon composite material having a void volume fraction of 17% was obtained.

**Claims**

1. A method for preparing a carbon/carbon composite material comprising the steps of:

impregnating a carbon preform obtained by molding carbon fibers and/or raw materials for carbon fibers or by molding these fibers and a carbon matrix precursor comprising pitch and/or resins with carbonaceous pitch having a carbon/hydrogen atomic ratio of less than 1.60, and

carbonizing or carbonizing and graphitizing the thus impregnated preform to densify the preform thereby to provide a carbon/carbon composite material,

said carbonization or carbonization and graphitization are carried out at 500 - 2800°C in an inert gas atmosphere, and a densification parameter expressed by the following formula : densification parameter = (yield of carbonized pitch obtained by carbonization of carbonaceous pitch under gas pressure) x (relative density of carbonized pitch obtained from said pitch under gas pressure) is in the range of from 0.1 to 1.0, in which formula the yield of carbonized pitch is a ratio by weight of a product obtained by carbonization treating carbonaceous pitch alone under the same gas pressure as that used in the step of densification, to the carbonaceous pitch used, and the relative density of carbonized pitch obtained under said gas pressure is a value obtained by dividing (A) the bulk density of a product obtained by carbonization treating carbonaceous pitch alone under the same gas pressure as that used in the step of densification by (B) the true density of said carbonized carbonaceous pitch, and further

said gas pressure applied in the step of densification is in the range of from higher than atmospheric pressure to lower than 0.98 MPa (10 kgf/cm$^2$).

2. A method according to claim 1,
characterized in that said gas pressure applied in the step of densification is carried out at the time of carbonization treatment.

3. A method according to claim 1,
characterized in that the temperature range during the carbonization or carbonization and graphitization treatment is from 560 to 2800 °C.

4. A method according to claim 1,
characterized in that a void volume fraction of said carbon preform is in the range of from 5 to 80%.

5. A method according to claim 1,
**characterized in that**
said densification parameter of said carbonaceous pitch is in the range of from 0.15 to 1.0.

6. A method according to claim 1,
characterized in that said gas pressure applied in the step of densification is carried out at the time of carbonization and graphitization treatments.

**Patentansprüche**

1. Verfahren zum Herstellen eines Kohlenstoff/Kohlenstoffverbundmaterials, das folgende Schritte aufweist:

Imprägnieren eines Kohlenstoffvorformlings, der durch Formen von Kohlefasern und/oder Rohmaterialien für Kohlefasern oder durch Formen dieser Fasern und einer Kohlenstoffzwischenstoffmatrix, die Teer und/oder Harte mit kohlehaltigem Teer enthält, der ein Kohlenstoff/Wasserstoff-Atomverhältnis von weniger als 1,60 hat, geschaffen worden ist, und

Karbonisieren oder Karbonisieren und Graphitisieren des derart imprägnierten Vorformlings, um die Vortorm zu verdichten, um dadurch ein Kohlenstoff/Kohlenstoffverbundmaterial zu schaffen,

wobei das Karbonisieren oder das Karbonisieren und das Graphitisieren durchgeführt wird bei einer Temperatur von 500 - 2800°C in einer Inertgasatmosphäre und einem Verdichtungsparameter, der durch die folgende Gleichung ausgedrückt werden kann: Verdichtungsparameter = (Ausbeute an karbonisiertem Teer, die durch Karbonisieren von kohlehaltigem Teer unter Gasdruck erzielt worden ist) x (relative Dichte des karbonisierten Teers, die mit dem Teer unter Gasdruck erzielt worden ist) in einem Bereich von 0,1 bis 1,0 liegt, wobei in dieser Formel die Ausbeute an karbonisiertem Teer das Gewichtsverhältnis eines Produktes, das durch eine Karbonisierbehandlung von kohlehaltigem Teer lediglich bei demselben Gasdruck erzielt wird, der bei dem Verdichtungsschritt verwendet wird, zu dem verwendeten kohlehaltigen Teer ist, und die relative Dichte des karbonisierten Teers, die bei dem Gasdruck erzielt werden kann, ein Wert ist, der ermittelt wird, indem (A) die Schüttdichte eines Produktes, das durch Karbonisierbehandlung von kohlehaltigem Teer lediglich bei demselben Gasdruck, bei dem der Verdichtungsschritt durchgeführt worden ist, erzielt wird, durch (B) die wahre Dichte des karbonisierten kohlehaltigen Teers dividiert wird und wobei weiterhin

der in dem Verdichtungsschritt verwendete Gasdruck in einem Bereich oberhalb des atmosphärischen Druckes und unterhalb von 0,98 MPa (10 kgf/cm$^2$) liegt.

2. Verfahren nach Anspruch 1, **dadurch gekennzeichnet**, daß der in dem Verdichtungsschritt aufgebrachte Gasdruck zum Zeitpunkt der Karbonisierbehandlung aufgebracht wird.

3. Verfahren nach Anspruch 1, **dadurch gekennzeichnet**, daß der Temperaturbereich während der Karbonisier- oder der Karbonisier- und Graphitisier-Behandlung in einem Bereich von 560 bis 2800°C liegt.

4. Verfahren nach Anspruch 1, **dadurch gekennzeichnet**, daß der Anteil an Hohlraumvolumen des Kohlenstoffvorformlings in einem Bereich von 5 bis 80 % liegt.

5. Verfahren nach Anspruch 1, **dadurch gekennzeichnet**, daß der Verdichtungsparameter des kohlenstoffhaltigen Teers in einem Bereich von 0,15 bis 1,0 liegt.

6. Verfahren nach Anspruch 1, **dadurch gekennzeichnet**, daß der in dem Verdichtungsschritt aufgebrachte Gasdruck zum Zeitpunkt der Karbonisier- und Graphitisier-Behandlung angewendet wird.

**Revendications**

1. Procédé de préparation d'un matériau composite carbone/carbone comprenant les étapes de :

imprégnation d'une préforme de carbone obtenue en moulant des fibres de carbone et/ou des matières premières pour fibres de carbone ou en moulant ces fibres et un précurseur de matrice de carbone comprenant du brai et/ou des résines avec un brai carboné ayant un rapport atomique carbone/hydrogène inférieur à 1,60, et
carbonisation ou carbonisation et graphitisation de la préforme ainsi obtenue pour densifier la préforme, afin de fournir ainsi un matériau composite carbone/carbone,
ladite carbonisation ou ladite carbonisation et graphitisation étant réalisées à 500-2800°C dans une atmosphère de gaz inerte, et le paramètre de densification étant exprimé par la formule suivante : le paramètre de densification = (rendement en brai carbonisé obtenu par carbonisation du brai carboné sous une pression de gaz) x (densité relative du brai carbonisé obtenu à partir dudit brai sous une pression de gaz) est dans un intervalle compris entre 0,1 et 1,0, formule dans laquelle le rendement en brai carbonisé est le rapport pondéral du produit obtenu par un traitement de carbonisation de brai carboné seul sous la même pression de gaz que celle utilisée dans l'étape de densification, au brai carboné utilisé, et la densité relative du brai carbonisé obtenu sous ladite pression de gaz est la valeur obtenue en divisant (A) la densité apparente du produit obtenu en traitant par carbonisation le brai carboné seul sous la même pression de gaz que celle utilisée dans l'étape de densification par (B) la densité vraie dudit brai carboné carbonisé, et en outre
ladite pression de gaz appliquée dans l'étape de densification est dans un intervalle compris entre un niveau supérieur à la pression atmosphérique et un niveau inférieur à 0,98 MPa (10 kgf/cm$^2$).

**2.** Procédé selon la revendication 1, caractérisé en ce que ladite pression de gaz appliquée dans l'étape de densification est fournie au moment du traitement de carbonisation.

**3.** Procédé selon la revendication 1, caractérisé en ce que l'intervalle de température au cours du traitement de carbonisation ou de carbonisation et de graphitisation est compris entre 560 et 2800°C.

**4.** Procédé selon la revendication 1, caractérisé en ce que la fraction de volume vide de ladite préforme de carbone est dans un intervalle compris entre 5 et 80%.

**5.** Procédé selon la revendication 1, caractérisé en ce que ledit paramètre de densification dudit brai carboné est dans un intervalle compris entre 0,5 et 1,0.

**6.** Procédé selon la revendication 1, caractérisé en ce qu'on applique ladite pression de gaz dans l'étapte de densification au moment des traitements de carbonisation et de graphitisation.